# DEMANDE DE BREVET EUROPEEN

(11) **EP 4 600 085 A2**
(43) Date de publication de la demande: **13.08.2025**
(21) Numéro de dépôt: 25156726.9
(22) Date de dépôt: 10.02.2025
(51) Int. Cl.: B60N 2/34, B60N 2/20, B60R 5/04

(54) **VÉHICULE AVEC UN SIÈGE MODULABLE EN FONCTION LIT**

(30) Priorité: 12.02.2024 FR 2401364
(71) Demandeur: Renault s.a.s, 92100 Boulogne Billancourt (FR)
(72) Inventeur: BUET, Gael, 78280 GUYANCOURT (FR); GARDAREIN, Béatrice, 78280 GUYANCOURT (FR); LECROISEY, Sébastien, 78280 GUYANCOURT (FR); MASSON, Xavier, 78280 GUYANCOURT (FR); RANDAZZINI, Marc, 78280 GUYANCOURT (FR); ROY, Jean-Baptiste, 78280 GUYANCOURT (FR)

(57) **Abrégé**

Véhicule (1) comportant :
- un habitacle comportant un sol (51) et un plafond (17) reliés entre eux par des montants latéraux (25) ;
- au moins un siège (2) modulable en fonction lit comportant :
∘ une assise (3) ;
∘ un dossier (5) mobile par rapport à l'assise (3) entre une position relevée et une position rabattue,
∘ un support (10) mobile par rapport au dossier (5) entre une position repliée et au moins une position déployée, la surface arrière (7) du dossier (5) et la surface d'appui (11) du support (10) formant un bâti support pour recevoir un utilisateur lorsque le dossier (5) est en position rabattue et le support (10) en position déployée ;

- au moins un organe de fixation (15) du support (10) au plafond (17) et/ou à l'un des montant latéraux (25) pour maintenir le support (10) dans ladite au moins une position déployée lorsque le support (10) est dans ladite au moins une position déployée et que le dossier (5) est dans la position rabattue.

## Description

### Domaine technique

La présente invention concerne le domaine de l'automobile. En particulier, l'invention concerne un véhicule comportant un siège modulable en fonction lit.

### Technique antérieure

Pour dormir dans un véhicule qui a un usage principal dédié au déplacement de passagers, c'est-à-dire autre qu'n camping-car ou un van aménagé pour le camping, il est connu de placer dans au-dessus du plancher du coffre et des sièges arrière un caisson sur lequel un matelas peut être installé. Cette solution est cependant relativement encombrante et occupe une grande partie de l'espace du coffre.

Il est également connu de positionner un matelas sur le plancher du coffre et l'arrière du dossier.

### Exposé de l'invention

Il existe un besoin de disposer d'un véhicule permettant une modulation en fonction lit, en limitant au maximum la perte d'espace tout en garantissant du confort pour l'utilisateur.

### Résumé de l'invention

La présente invention répond à ce besoin grâce à, selon l'un de ses aspects, un véhicule comportant :
- un habitacle comportant un sol et un plafond reliés entre eux par des montants latéraux ;
- au moins un siège modulable en fonction lit comportant :
   ∘ une assise ;
   ∘ un dossier mobile par rapport à l'assise entre une position relevée et une position rabattue, une surface frontale du dossier étant en vis-à-vis d'une surface de l'assise lorsque le dossier est dans la position rabattue, la surface frontale du dossier et la surface de l'assise étant respectivement destinées à recevoir le dos et le fessier d'un utilisateur en position assise sur le siège ;
   ∘ un support mobile par rapport au dossier entre une position repliée, dans laquelle une surface d'appui du support fait face à une surface arrière du dossier opposée à la surface frontale du dossier, et au moins une position déployée, dans laquelle la surface d'appui du support s'étend dans la continuité de la surface arrière du dossier, la surface arrière du dossier et la surface d'appui du support formant un bâti support pour recevoir un utilisateur en position allongée ou semi-assise lorsque le dossier est en position rabattue et le support en position déployée ;
- au moins un organe de fixation du support au plafond et/ou à l'un des montants latéraux pour maintenir le support dans ladite au moins une position déployée lorsque le support est dans ladite au moins une position déployée et que le dossier est dans la position rabattue.

Grâce à l'utilisation du support mobile par rapport au dossier et dudit au moins un organe de fixation, le siège selon l'invention peut être facilement et rapidement modulé en fonction lit, tout en limitant l'espace occupé par le support et ledit au moins un organe de fixation.

La surface frontale du dossier et la surface de l'assise peuvent former entre elles un angle non nul, notamment compris entre 60° et 120°, lorsque le dossier est dans la position relevée.

La surface frontale du dossier et la surface de l'assise peuvent former entre elles un angle compris entre 0° et 20°, lorsque le dossier est dans la position rabattue.

Par « *la surface d'appui du support s'étend dans la continuité de la surface arrière du dossier »,* on entend que la jonction entre les deux surfaces se fait de manière continue, sans décrochement. En d'autres termes, les deux surfaces forment entre elles, lorsque le support est dans la position déployée, une surface sans butée.

Le véhicule peut comporter au moins deux sièges, notamment au moins un siège d'une place et un siège de deux places, notamment des sièges arrière.

Le véhicule peut comporter un matelas configuré pour être positionné au moins sur la surface d'appui du support et sur la surface arrière du dossier lorsque le support est dans ladite au moins une position déployée et que le dossier est dans la position rabattue.

Le sol de l'habitacle peut comporter une portion, notamment une cave à pied, devant ledit au moins un siège configurée pour recevoir les pieds d'un utilisateur assis dans le siège.

### Support

Le support peut s'étendre dans un plan de support.

Le support est de préférence un élément plat, notamment une planche ou une tablette, l'épaisseur du support étant notamment perpendiculaire à ce plan de support. Cela permet notamment de réduire son encombrement.

La surface d'appui du support est de préférence plane et s'étend dans le plan de support ou parallèlement à ce plan.

Le support peut comporter un panneau avec une structure alvéolaire, notamment en nid d'abeille. Cela permet de réduire la masse du panneau et donc de ne pas trop alourdir le véhicule et facilite la manipulation du support par l'utilisateur.

Le passage du support entre les positions repliée et déployée peut être fait manuellement ou électriquement, de préférence manuellement.

Le support peut être monté sur le dossier, notamment une sur une partie haute du dossier.

Le support peut être mobile en rotation entre les positions repliée et déployée autour d'un axe de rotation du support.

L'axe de rotation du support peut être parallèle à la surface d'appui.

Lorsque le dossier comporte une partie basse et une partie haute, le support peut être mobile en rotation entre la position repliée et ladite au moins une position déployée autour d'un axe de rotation du support dans la partie haute du dossier.

La surface arrière du dossier et la surface d'appui peuvent former entre elles un angle non nul, notamment compris entre 135° et 200°, lorsque le support est dans la position déployée.

La surface arrière du dossier et la surface d'appui peuvent former entre elles un angle non nul, notamment compris entre 0° et 20°, lorsque le support est dans la position repliée.

Le support peut être positionné dans plusieurs positions déployées, le véhicule comportant de préférence un moyen de réglage configuré pour sélectionner la position déployée à utiliser du support.

Dans un mode de réalisation, le moyen de régalage est configuré permettre la sélection par utilisateur de l'angle formé entre la surface arrière du dossier et la surface d'appui lorsque le support est dans la position déployée, notamment dans une plage entre 135° et 200°.

La sélection peut être faite par incréments prédéterminés, par exemple compris entre 1° et 20°.

En variante, la sélection peut être faite de manière continue, c'est-à-dire sans incréments prédéterminés.

Le moyen de sélection peut comporter un repère visuel de l'angle sélectionné.

Lorsque le sol de l'habitacle comporte une portion, notamment une cave à pied, devant ledit au moins un siège configurée pour recevoir les pieds d'un utilisateur assis dans le siège, le support peut être configuré pour qu'une surface de maintien, opposée à la surface d'appui, soit en vis-à-vis avec ladite portion, notamment la cave à pied, lorsque le support est dans ladite au moins une position déployée et que le dossier est dans la position rabattue.

### Organe de fixation du support

Le véhicule peut comporter un organe d'ajustement configuré pour ajuster la position dudit au moins un organe de fixation dans une zone local prédéterminée du plafond et/ou des montants latéraux.

Dans un mode de réalisation, le moyen de régalage est au moins partiellement formé par l'organe d'ajustement.

Ledit au moins un organe de fixation peut être, au moins partiellement, formé par un élément ayant une seconde fonction. Par exemple, un organe de fixation peut être formé par une poignée.

Le véhicule peut comporter au moins un organe de fixation second du support sur le support configuré pour coopérer avec ledit au moins un organe de fixation pour maintenir le support dans ladite au moins une position déployée lorsque le support est dans ladite au moins une position déployée et que le dossier est dans la position rabattue.

En particulier, le véhicule peut comporter au moins deux organes de fixation ou au moins un organe de fixation et au moins un organe de fixation second.

Le véhicule peut comporter au moins un élément souple configuré pour coopérer avec ledit au moins un organe de fixation, et le cas échéant avec ledit au moins un organe de fixation second, pour maintenir le support dans ladite au moins une position déployée lorsque le support est dans ladite au moins une position déployée et que le dossier est dans la position rabattue.

L'élément souple peut avoir une forme élancée.

L'élément souple peut avoir une longueur, selon un axe principal, comprise entre 1 m et 5 m.

L'élément souple peut être une sangle, une corde, une chaine, de préférence une sangle.

L'élément souple peut être formé d'un matériau dont le module d'Youg est supérieur à 5 GPa. L'élément souple est ainsi faiblement élastique ce qui limite son élongation lors de l'utilisation.

Ledit au moins un organe de fixation et/ou ledit au moins un organe de fixation second peut être un passage de l'élément souple ou un ancrage de de l'élément souple.

Lorsque le véhicule comporte au moins deux sièges, notamment au moins un siège d'une place et un siège de deux places, le véhicule peut comporter au moins un organe de fixation par siège et, de préférence, au moins un élément souple par siège.

### Coffre

Le véhicule peut comporter un coffre en vis-à-vis avec la surface arrière du dossier lorsque dans la position relevée.

Le coffre peut comporter un plancher mobile entre une position basse et une position haute.

Une surface supérieure du plancher peut être configurée pour être dans la continuité de la surface arrière du dossier lorsque le dossier est dans la position rabattue et que le plancher est dans la position haute. Cela permet d'avoir une longueur disponible pour l'utilisation en mode lit suffisamment importante pour qu'une personne de taille moyenne s'allonge.

La distance entre une extrémité du support, opposée à une extrémité du support montée sur le dossier, correspondant à la « tête du lit », et une extrémité du plancher, opposée à une extrémité du plancher en contact avec le dossier, correspondant au « pied de lit », peut d'être d'au moins 1m80.

L'épaisseur du plancher peut être d'au moins 15 mm, notamment au moins 20 mm.

Le coffre peut comporter une plage arrière, la plage arrière étant configurée pour être placée sous le plancher lorsqu'en position haute.

### Procédé de mise en place de la fonction lit

L'invention a encore pour objet, selon un autre de ses aspects, en combinaison avec ce qui précède, un procédé de mise en place de la fonction lit d'un du siège d'un véhicule tel que défini précédemment, comportant :
- le passage du dossier de la position relevée à la position rabattue ;
- le passage du support de la position repliée à la position déployée de sorte que la surface arrière du dossier et la surface d'appui du support forment un bâti support pour recevoir un utilisateur en position allongée ou semi-assise lorsque le dossier est en position rabattue et le support en position déployée ;
- le maintien du support dans ladite au moins une position déployée à l'aide dudit au moins un organe de fixation du support.

### Brève description des dessins

L'invention pourra être mieux comprise à la lecture de la description détaillée qui va suivre, d'exemples de mise en oeuvre non limitatifs de celle-ci, et à l'examen du dessin annexé, sur lequel
[Fig 1] illustre, en vue de côté, partiellement, de manière schématique, un exemple de véhicule selon l'invention dans lequel le support est dans la position repliée et le dossier est dans la position relevée,
[Fig 2] illustre, en vue de dessus, de manière schématique, les sièges du véhicule de la figure 1,
[Fig 3] illustre, en vue arrière, les sièges de la figure 2,
[Fig 4] est une vue en coupe de la figure 2 selon A,
[Fig 5] illustre, en perspective, de manière schématique et partielle, une variante de véhicule 1 selon l'invention,
[Fig 6] illustre, en vue de dessus, de manière schématique, une sangle du véhicule de la figure 5,
[Fig 7] illustre, en perspective, de manière schématique et partielle, une autre variante de véhicule 1 selon l'invention,
[Fig 8] illustre, en vue de dessus, de manière schématique, les sangles du véhicule de la figure 7,
[Fig 9] illustre, en perspective, de manière schématique, le coffre d'un véhicule selon l'invention,
[Fig 10] est une vue en coupe de la figure 3 selon C,
[Fig 11] est une vue similaire à la figure 1 dans laquelle le support est dans la position repliée et le dossier est dans la position rabattue,
[Fig 12] est une vue similaire à la figure 1 dans laquelle le support est dans la position déployée et le dossier est dans la position rabattue, et
[Fig 13] illustre en vue de côté, de manière schématique et partielle, un autre exemple de véhicule selon l'invention dans lequel le support est dans la position déployée et le dossier est dans la position rabattue.

### Description détaillée

Dans la suite de la description, les éléments identiques ou de fonctions identiques portent le même signe de référence. A des fins de concision de la présente description, ils ne sont pas décrits en regard de chacune des figures, seules les différences entre les modes de réalisation étant décrites.

Sur les figures, les proportions réelles n'ont pas toujours été respectées, dans un souci de clarté.

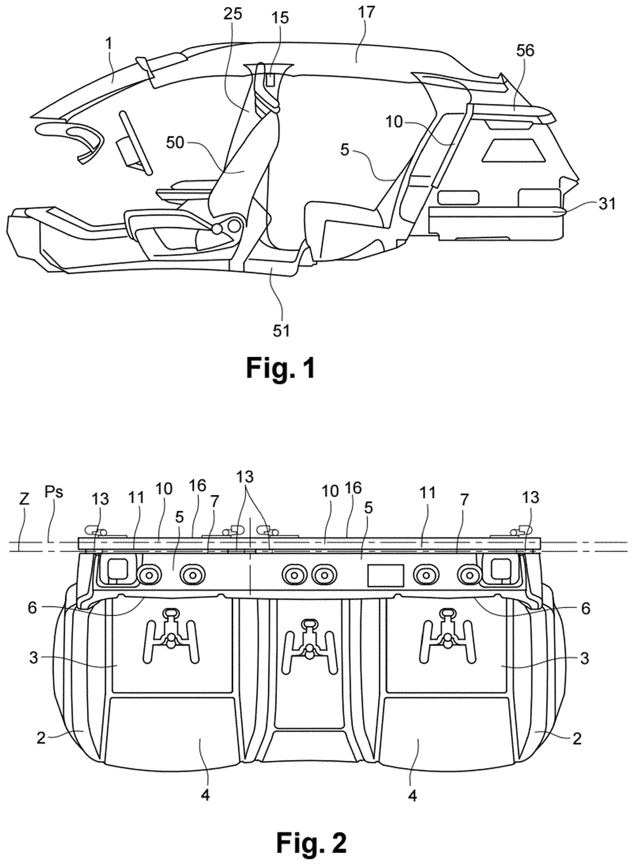

On a illustré aux figures 1 à 12 un véhicule 1 comportant une banquette arrière comportant deux sièges 2 selon l'invention, autrement appelée banquette 1/3 2/3.

Par exemple, l'un des sièges 2 comporte une seule place, l'autre comporte deux places.

Chaque siège 2 comporte une assisse 3 comportant une surface d'assise 4 configurée pour recevoir le fessier d'un utilisateur du siège 2.

Chaque siège 2 comporte également un dossier 5 comportant une surface frontale 6 destinée à recevoir le dos d'un utilisateur.

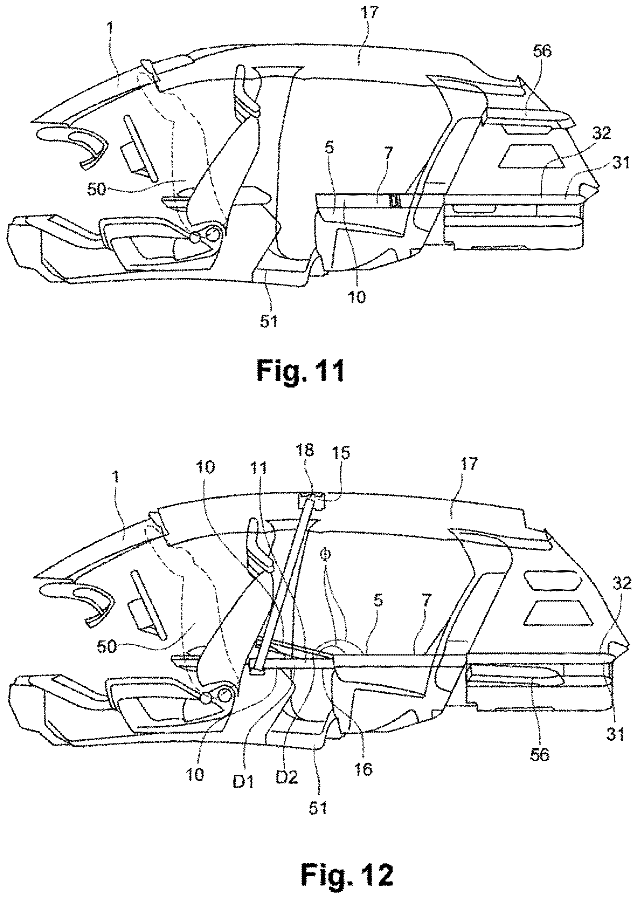

Le dossier 5 est mobile par rapport à l'assise 3 entre une position relevée (figures 1 à 3) et une position rabattue (figures 11 et 12).

Lorsque le dossier 5 est dans la position rabattue, la surface frontale 6 du dossier 5 est en vis-à-vis de la surface d'assise 4, les deux surfaces formant entre elles un angle sensiblement nul.

Lorsque le dossier 5 est dans la position relevée, la surface frontale 6 du dossier 5 et la surface d'assise 4 forment entre elles un angle compris entre 60° et 120°.

Chaque siège 2 comporte également un support 10 mobile par rapport au dossier 5 entre une position repliée (figures 1 à 3 et 11) et des positions déployées (figure 12).

Le support 10 est monté sur le haut du dossier 5 à l'aide de charnières 13.

Le support 10 passe entre la position repliée et les positions déployées par une rotation autour d'axe Z passant par les charnières 13.

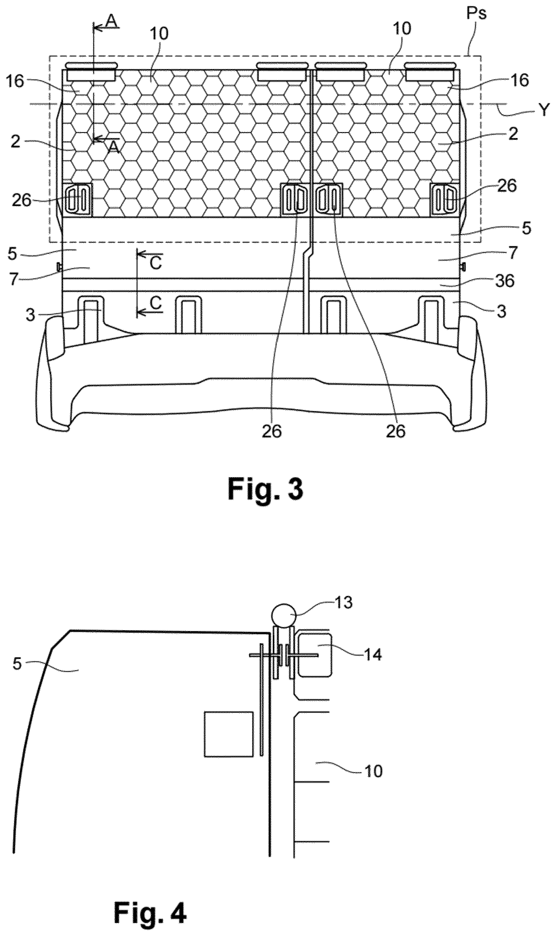

Comme illustré sur la figure 4 selon la coupe A-A, la charnière 13 peut être fixée par vissage respectivement sur le dossier 5, notamment au niveau d'un plaque du dossier 5, et sur le support 10, notamment au niveau d'un renfort 14.

Le support 10 s'étend, dans cet exemple, dans un plan de support Ps et est plat.

Le support 10 est formé à partir d'un panneau avec une structure en nid d'abeille.

Le support 10 comporte une surface d'appui 11 qui fait face à une surface arrière 7 du dossier 5, opposée à la surface frontale 6, lorsque le support 10 est dans la position repliée.

Dans cet exemple, la surface d'appui 11 et la surface arrière 7 forment entre elles un angle nul lorsque le support 10 est dans la position repliée.

Le support 10 comporte des moyens de fixation rapide sur la surface d'appui 11, non représentés dans un souci de clarté, permettant de maintenir le support 10 dans la position repliée, notamment une fixation auto agrippante de type velcro^{®}.

Lorsque le support 10 est dans une position déployée, la surface d'appui 11 du support 10 s'étend dans la continuité de la surface arrière 7 du dossier 5.

La surface arrière 7 du dossier 5 et la surface d'appui 11 du support 10 forment un bâti support pour recevoir un utilisateur en position allongée ou semi-assise lorsque le dossier 5 est en position rabattue et le support 10 en position déployée.

Le véhicule 1 comporte également un organe de fixation 15 du support 10 pour maintenir le support 10 dans ladite au moins une position déployée lorsque le support est dans ladite au moins une position déployée et que le dossier est dans la position rabattue.

Sur la figure 1, le véhicule comporte deux organes de fixation 15 sur deux montants latéraux 25. Par exemple, une sangle 18 peut être tendue entre les deux organes de fixation 15.

Chaque support 10 comporte également des organes de fixation second 26, dans cet exemple des passages de sangle 18, au niveau d'une surface de maintien 16 opposée à la surface d'appui 11.

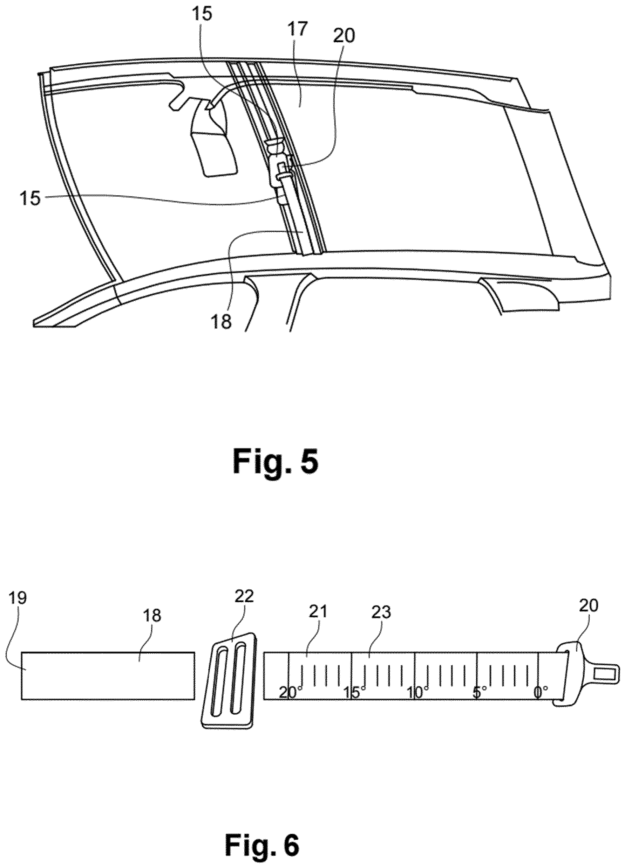

Dans un mode de réalisation, illustré sur la figure 5, le véhicule 1 comporte sur un plafond 17 un organe de fixation 15 par siège 2.

Dans cet exemple, l'organe de fixation 15 est un ancrage permet la fixation par encliquetage d'une sangle 18.

Comme illustré sur la figure 6, la sangle 18 peut comporter une première extrémité 19 fixée au support 10 à l'aide d'un organe de fixation second 26, par exemple au niveau de la surface de maintien 16 opposée à la surface d'appui 11.

La sangle 18 comporte une seconde extrémité 20, opposée à la première extrémité 19, et comportant un mousqueton configuré pour se fixer sur l'organe de fixation 15.

La sangle 18 comporte un moyen de réglage 21 configuré pour sélectionner l'angle ϕ formé entre la surface arrière 7 du dossier 5 et la surface d'appui 11 lorsque le support 10 est dans la position déployée.

Le moyen de réglage 21 comporte une boucle 22 permettant réduire la longueur de la sangle 18 et une graduation 23 produisant un repère visuel de l'angle ϕ sélectionné.

Le moyen de réglage 21 permet, par exemple, de régler l'angle ϕ dans une plage entre 135° et 200°.

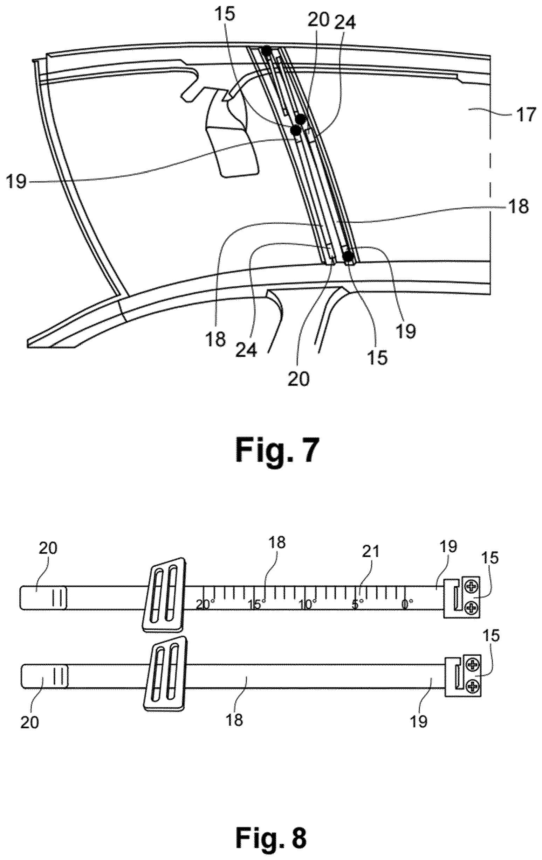

Dans une variante illustrée sur la figure 7, le véhicule 1 comporte au niveau du plafond 17 deux organes de fixation 15 par siège 2.

Dans cette variante, chaque organe de fixation 15 est relié à une sangle par une première extrémité 19.

La deuxième extrémité 20 comporte, comme illustré sur la figure 8, un moyen de fixation à l'autre sangle 18.

Pour maintenir le support 10 dans l'une des positions déployée, les sangles 18 sont déplacées de manière à venir faire coopérer leurs extrémités 20 sous le support 10 au niveau de la surface de maintien 16.

La surface de maintien 16 peut comporter un relief (non illustré) pour limiter le glissement des sangles 18.

Le véhicule 1 peut également comporter des points d'accroche 24 au niveau du plafond 17 pour maintenir les extrémités 20 des sangles 18 lorsque le siège 2 n'est pas en fonction lit. Les points d'accroche 24 sont par exemple des aimants.

Seul l'une des deux sangles 18 peut comporter le moyen de réglage 21.

Dans une variante de la figure 7, l'une des deux sangles 18 a son extrémité 19 qui est reliée à la surface arrière 7 do dossier 5.

Comme indiqué précédemment, les sièges 2 sont des sièges arrière du véhicule 1.

La face arrière 7 et la surface d'appui 11 sont en face d'un coffre 30 lorsque le siège 2 est dans la position relevée et le support 10 dans la position repliée, comme illustré sur la figure 5.

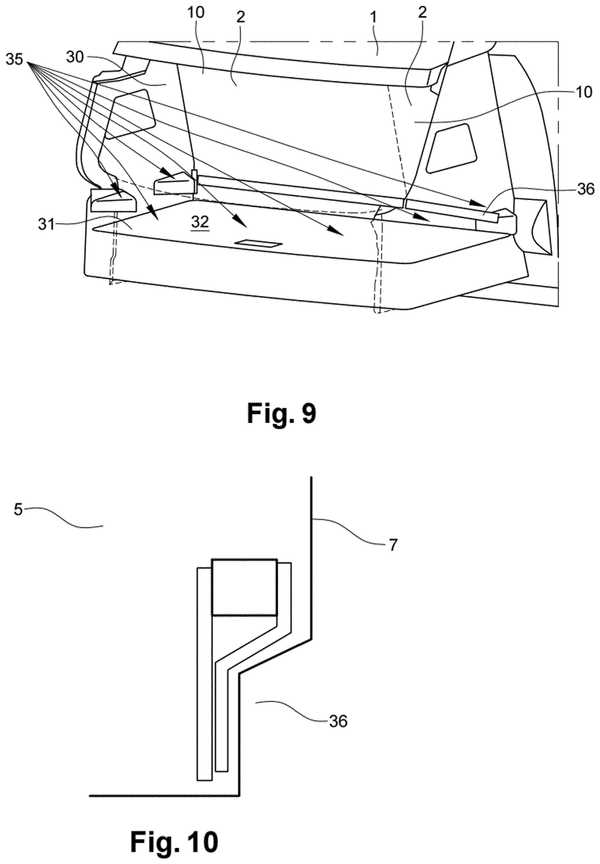

Le coffre 30 comporte un plancher 31 mobile entre une position basse (figures 1 et 9) et une position haute (figures 11 et 12), une surface supérieure 32 du plancher 31 étant configurée pour être dans la continuité de la surface arrière 7 du dossier 5 lorsque le dossier 5 est dans la position rabattue et que le plancher 31 est dans la position haute.

Lorsque dans la position haute, le plancher 31 est maintenu par des ergots 35 sur le hayon du coffre 30 et les côtés du coffre 30.

Lorsque dans la position haute, le plancher 31 est également en appui sur le dossier 5 au niveau d'un renfoncement 36 de la surface arrière 7, dont la coupe est illustrée sur la figure 6. Ce renfoncement 36 permet d'avoir une continuité entre la surface supérieure 32 du plancher 31 et la surface arrière 7 du dossier 5 lorsque le dossier 5 est dans la position rabattue et que le plancher 31 est dans la position haute.

La profondeur du renfoncement 36 est de préférence sensiblement égale à l'épaisseur du plancher 31, qui est elle égale à 20 mm environ.

Sur les figures 1, 11 et 12, un exemple de mise en place de la fonction lit est illustré.

Au début, comme illustré sur la figure 1, les sièges 2 sont dans la position relevée, leur support 10 est dans la position replié.

Cela correspond à la configuration de transport, dans laquelle des passagers peuvent s'installer dans les sièges 2.

Ensuite, comme illustré sur la figure 11, un dossier 5 passe de la position relevée à la position rabattue.

De plus, un siège conducteur 50 du véhicule 1 est également rabattue, afin de gagner de l'espace.

Le plancher 31 est, dans cette étape, positionné dans la position haute pour venir dans la continuité de la surface arrière 7 du dossier 5.

Ensuite, comme illustré sur la figure 12, le support 10 passe dans l'une des positions déployées de manière à ce que la surface d'appui 11 soit dans la continuité de la surface arrière 7 du dossier 5 et que la surface de maintien 16 soit face à un sol 51 du véhicule 1.

Ensuite la ou les sangles 18 à l'aide du ou des organes de fixation 15 et/ou du ou des organes de fixation second 26, en fonction du mode de réalisation, sont mise en place pour maintenir le support 10 dans une position déployée.

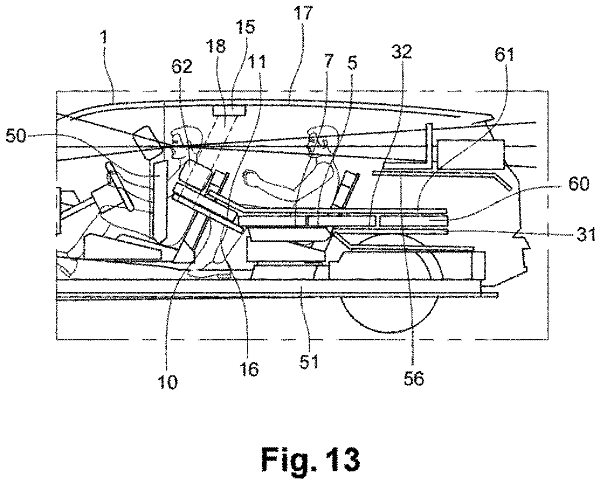

L'angle *ϕ* peut être réglé à l'aide du moyen de régale 21. Par exemple, sur la figure 13, l'angle *ϕ* est de 180° pour un support 10 dans une première position déployée D1 et de 160° dans une deuxième position déployée D2.

La surface arrière 7 du dossier 5, la surface d'appui 11 du support 10 et la surface supérieure 32 du plancher 31 forment ainsi un bâti support pour recevoir un utilisateur en position allongée ou semi-assise lorsque le dossier est en position rabattue et le support en position déployée.

De plus, une plage arrière 56 du coffre 30 peut être placée dans un espace formé entre le plancher 31 et le sol 51 du véhicule 1. En variante, la plage arrière n'est pas bougée et permet de placer des accessoires de confort pour l'utilisateur du lit, comme par exemple un ordinateur.

Un matelas 60 peut ensuite être positionné sur la surface d'appui 11 du support 10, sur la surface arrière 7 du dossier 5, et sur la surface supérieure 32 du plancher 31, comme illustré sur une variante de véhicule 1 sur la figure 13.

Un oreiller 61 et une couverture 62 peuvent également être positionnés.

## Revendications

1. Véhicule (1) comportant :
- un habitacle comportant un sol (51) et un plafond (17) reliés entre eux par des montants latéraux (25) ;
- au moins un siège (2) modulable en fonction lit comportant :
∘ une assise (3) ;
∘ un dossier (5) mobile par rapport à l'assise (3) entre une position relevée et une position rabattue, une surface frontale (6) du dossier étant en vis-à-vis d'une surface de l'assise (4) lorsque le dossier (5) est dans la position rabattue, la surface frontale (6) du dossier (5) et la surface de l'assise (4) étant respectivement destinées à recevoir le dos et le fessier d'un utilisateur en position assise sur le siège (2) ;
∘ un support (10) mobile par rapport au dossier (5) entre une position repliée, dans laquelle une surface d'appui (11) du support (10) fait face à une surface arrière (7) du dossier (5) opposée à la surface frontale (6) du dossier (5), et au moins une position déployée, dans laquelle la surface d'appui (11) du support (11) s'étend dans la continuité de la surface arrière (7) du dossier (5), la surface arrière (7) du dossier (5) et la surface d'appui (11) du support (10) formant un bâti support pour recevoir un utilisateur en position allongée ou semi-assise lorsque le dossier (5) est en position rabattue et le support (10) en position déployée ;
- au moins un organe de fixation (15) du support (10) au plafond (17) et/ou à l'un des montant latéraux (25) pour maintenir le support (10) dans ladite au moins une position déployée lorsque le support (10) est dans ladite au moins une position déployée et que le dossier (5) est dans la position rabattue.

2. Véhicule (1) selon la revendication 1, comportant au moins un élément souple (18), notamment au moins une sangle, configuré pour coopérer avec ledit au moins un organe de fixation (15) pour maintenir le support (10) dans ladite au moins une position déployée lorsque le support (10) est dans ladite au moins une position déployée et que le dossier (5) est dans la position rabattue.

3. Véhicule (1) selon la revendication 1 ou 2, comportant au moins un organe de fixation second (26) du support sur le support (10) configuré pour coopérer avec ledit au moins un organe de fixation (15) pour maintenir le support (10) dans ladite au moins une position déployée lorsque le support (10) est dans ladite au moins une position déployée et que le dossier (5) est dans la position rabattue.

4. Véhicule (1) selon les revendications 2 et 3, dans lequel ledit au moins un organe de fixation (15) et/ou ledit au moins un organe de fixation second (26) est un passage de l'élément souple ou un ancrage de l'élément souple.

5. Véhicule (1) selon l'une quelconque des revendications précédentes, dans lequel le support (10) comporte un panneau avec une structure alvéolaire, notamment en nid d'abeille.

6. Véhicule (1) selon l'une quelconque des revendications précédentes, dans lequel le dossier (5) comporte une partie basse et une partie haute, le support (10) étant mobile en rotation entre la position repliée et ladite au moins une position déployée autour d'un axe de rotation (Z) du support (10) dans la partie haute du dossier (5).

7. Véhicule (1) selon l'une quelconque des revendications précédentes, dans lequel le support (10) peut être positionné dans plusieurs positions déployées, le véhicule (1) comportant un moyen de réglage (21) configuré pour sélectionner la position déployée du support (10) à utiliser.

8. Véhicule (1) selon l'une quelconque des revendications précédentes, le sol (51) de l'habitacle comportant une portion, notamment une cave à pied, devant ledit au moins un siège (2) configurée pour recevoir les pieds d'un utilisateur assis dans le siège (2), le support (10) étant configuré pour qu'une surface de maintien (16), opposée à la surface d'appui (11), soit en vis-à-vis avec ladite portion, notamment la cave à pied, lorsque le support (10) est dans ladite au moins une position déployée et que le dossier (5) est dans la position rabattue.

9. Véhicule (1) selon l'une quelconque des revendications précédentes, comportant un coffre (30) en vis-à-vis avec la surface arrière (7) du dossier (5) lorsque dans la position relevée, le coffre (30) comportant un plancher (31) mobile entre une position basse et une position haute, une surface supérieure (32) du plancher (31) étant configurée pour être dans la continuité de la surface arrière (7) du dossier (5) lorsque le dossier (5) est dans la position rabattue et que le plancher (31) est dans la position haute.

10. Véhicule (1) selon l'une quelconque des revendications précédentes, comportant au moins deux sièges (2), notamment au moins un siège (2) d'une place et un siège (2) de deux places, et au moins un organe de fixation (15) par siège (2).
